# EUROPEAN PATENT APPLICATION

(11) **EP 1 625 985 A1**
(43) Date of publication of application: **15.02.2006**
(21) Application number: 05254927.6
(22) Date of filing: 06.08.2005
(51) Int. Cl.: B60R 25/10

(54) **A tracking system**

(30) Priority: 14.08.2004 GB 0418203
(71) Applicant: TMC Consultancy Ltd, Banbury, Oxfordshire OX16 9PA (GB)
(72) Inventor: Bure, Rudolf Arthur, Oxfordshire OX16 9JS (GB); Hutchings, Philip, Wiltshire SN11 9DU (GB)
(74) Representative: Stanley, Michael Gordon

(57) **Abstract**

An asset tracking assembly and a method of installation on an asset to be tracked, the assembly (10) comprising an enclosure (11) for securing to a support surface on the asset, and a tracking unit (20) comprising a housing (12) with a tracking device (31-34) therein and which is removably mountable within the enclosure (11). The enclosure (11) includes an electrical circuit (19) with a first programmable microprocessor and which enables the tracking unit (20) to sense the proximity of the enclosure (11) when the tracking unit (20) is mounted therein and electrically connected to the enclosure electrical circuit (19). The tracking unit (20) and enclosure may be pre-programmed to perform particular tasks once the presence of the tracking unit has been detected.

## Description

### Field

This invention relates to apparatus that are used to track the position and sometimes the status of an asset such as a vehicle trailer, or cargo container, and to transmit the information to a base station.

### Background of the Invention

Tracking systems for monitoring the status and location of vehicle trailers are well known. The systems typically include an automatic location device, for example a GPS (.Global Positioning Satellite) system, and a transceiver which is capable of transmitting location and other signals, and receiving signals from a base station. Such a system is described in the present applicant patent application GB-A-2381 915. The tracking units may be installed on a vehicle trailer or cargo container and in many cases are fixedly mounted to the trailer and optionally hardwired into the vehicle electrical system using an electrical tractor/trailer connection of the type described in GB-A-2381 135 in order to utilise the vehicle electrical system and detect its coupled status and occasionally as a power source.

Such tracking devices are expensive and the potential user of such devices may not purchase sufficient devices to enable all assets to be tracked e.g. all the trailers used with a commercial vehicle fleet, particularly if some vehicles and trailers are only in partial use say during periods of high demand. Fitting devices to only selected trailers is an option but would limit the flexibility for a transport planner seeking optimisation of a transport fleet.

Furthermore such devices are impractical to temporarily remove from one trailer to and mount to another trailer.

Another problem is that the fixed tracking devices are difficult to maintain and re-place in the event of unit failure.

The present invention seek to provide a tracking device which is more easily utilised amongst a number of moveable assets e.g. vehicle trailers.

### Statements of Invention

According to a first aspect of the present invention there is provided an asset tracking assembly comprising an enclosure for securing to a support surface on the asset to be tracked, and a tracking unit comprising a housing with a tracking device therein which is removably mountable within the enclosure, wherein the enclosure includes an electrical circuit with a programmable microprocessor which enables the tracking unit to sense, or detect, the presence of the enclosure when the tracking unit is mounted therein and electrically connected to said enclosure circuit.

Preferably the microprocessor carries an unique reference code such that the tracking unit can identify a particular enclosure and hence the related asset on electrical connection of the tracking device with the electrical circuit of the enclosure.

The identification process operates in a similar manner to that described in GB-A-2381 915 with reference to tractors & trailers.

The enclosure and housing may each including guide means acting between the housing and enclosure to aid interconnection of the two half connectors on insertion of the tracking unit into the enclosure.

The connector may comprise a pin and socket connector, preferably a multi-pin connector. The enclosure half connector in use may be permanently connected to at least one external parameter sensors and/or at least one external electrical system, which are connectable to the tracking device through the two half connectors. If such parameter sensors and/or systems are for example located on a tractor unit, then a tracking unit on a trailer can also sense the absence or presence of the tractor unit , or vice-versa.

The tracking device may be connectable to an external electrical power source, such as a vehicle electrical circuit through the enclosure half connector, and the tracking device is connected to said electrical power source by inter-engagement of said two mating half connectors when the tracking unit is inserted into the enclosure.

Preferably the enclosure is a box with an open end closable by a lid, and the guide means comprise guide surfaces on the sidewalls of the box that co-operate with guide surfaces on the housing. The guide surfaces on the box are guide rails, preferably of a dove tail cross-section which co-operate with like section grooves on the housing.

The electrical circuit on the enclosure which is connected to the respective half connector may further comprise an electrical connection sensor of the type described in GB-A-2399 467 which senses when the tracking assembly is connected to an external electrical systems which may include a power source.

The enclosure electrical circuit and half coupling may be mounted on a mounting plate which preferably locates on guide means on the enclosure and which may also act as a heat sink for the enclosure electronics and to a smaller extent for the tracking device. The guide means for the mounting plate may be the same guide means which act between the housing and enclosure.

The housing is a hollow container which includes a lid which closes said one end of the enclosure and the housing may be held in the enclosure by a secure means which can only be opened by authorised persons. The tracking device within the housing is similar to that disclosed in GB-A-2381 915.

According to a second aspect of the present invention there is provided an asset tracking assembly comprising an enclosure for securing to a support surface on the asset to be tracked, and a tracking unit comprising a housing with a tracking device therein which is removably mounted within the enclosure, the enclosure and tracking unit each including a mating half of an electrical connector with the enclosure half connector in use being permanently connected to at least one external electrical sensors and/or at least one external electrical system to which the tracking device is connectable by inter-engagement of said two mating half connectors when the housing is inserted into the enclosure.

The enclosure electrical circuit may include a programmable microprocessor which carries an reference code so that the tracking unit can identify a particular enclosure and hence related asset on insertion of the housing, in similar manner to that described in GB-A-2381 915 with reference to tractors & trailers.

Such an assembly is particularly useful in tracking vehicles and/or trailer units, boats, cargo containers, etc..

Another aspect of the present invention provides a method of installation of a tracking device on an asset which is to be tracked by means of the tracking device, wherein in said method there is provided;
an enclosure for securing to a support surface on said asset, the enclosure including an electrical circuit with a programmable microprocessor,
a tracking unit having a housing with a tracking device therein and which is removably mountable within the enclosure, and
on electrical connection of the tracking unit to the enclosure electric circuit , the presence of the tracking unit within the enclosure is automatically sensed.

The microprocessor may carry a unique reference code such that on electrical connection of the tracking device to the enclosure electric circuit the tracking device can identify a particular enclosure and hence the related asset.

Preferably the enclosure and tracking unit are provided with an electrical connector comprising two mating halves, one half connector being provided on the enclosure with the other mating half being provided on the tracking unit and connected to the tracking device, wherein the tracking device is connected to said electrical circuit by inter-engagement of said two mating half connectors when the tracking is inserted into the enclosure.

Various electrical sensors and electrical systems on the asset may be also permanently wired to the enclosure half connector for connection to the tracking device via the two mating half connectors. Such electrical systems may include and external power source.

Another aspect of the present invention provides a method of installation of a tracking device on an asset to be tracked, wherein in said method there is provided;
an enclosure for securing to a support surface on said asset ,
a tracking unit having a housing with said tracking device therein and which is removably mountable within the enclosure, and
an electrical connector comprising two mating halves, one half connector being provided on the enclosure and being permanently wired to at least one electrical system and/or sensor, the other mating half being provided on the tracking unit and connected to the tracking device,
wherein the tracking device is connected to said sensors and/or systems by inter-engagement of said two mating half connectors when the housing is inserted into the enclosure.

The tracking unit may simply be removed from the asset being tracked by removal of the housing from its enclosure. This facilitates maintenance of the unit , and allows for transfer of the unit to another asset which has been provided with an enclosure of the same type.

In said method the enclosure and hence the related asset may be provided with a unique code which is programmed into a programmable microprocessor which is provided on said enclosure, and the tracking unit can read said code to identify a particular enclosure and the respective asset on insertion of the housing. Said code may represent the specific constellation of connections provided to the asset for example, particular sensors, electrical circuitry, and/or specified programs incorporated into the microprocessor.

### Description of the Drawings

The invention will be described by way of example and with reference to the accompanying drawings in which:
- Fig. 1: is schematic sectional side view of a tracking assembly according to the present invention,
- Fig. 2: is a schematic side elevation of a housing and tracker unit of the tracking shown in Fig. 1,
- Fig. 3: is a schematic side elevation of the enclosure of the tracking assembly shown in Fig.1,
- Fig.4: is a front elevation of the trailer half of a known tractor/trailer electrical connector showing the connector pin array, and
- Fig.5: is a schematic circuit diagram for the enclosure/housing interconnection sensor in a tracking assembly according to the present invention.

### Detailed Description of the Invention

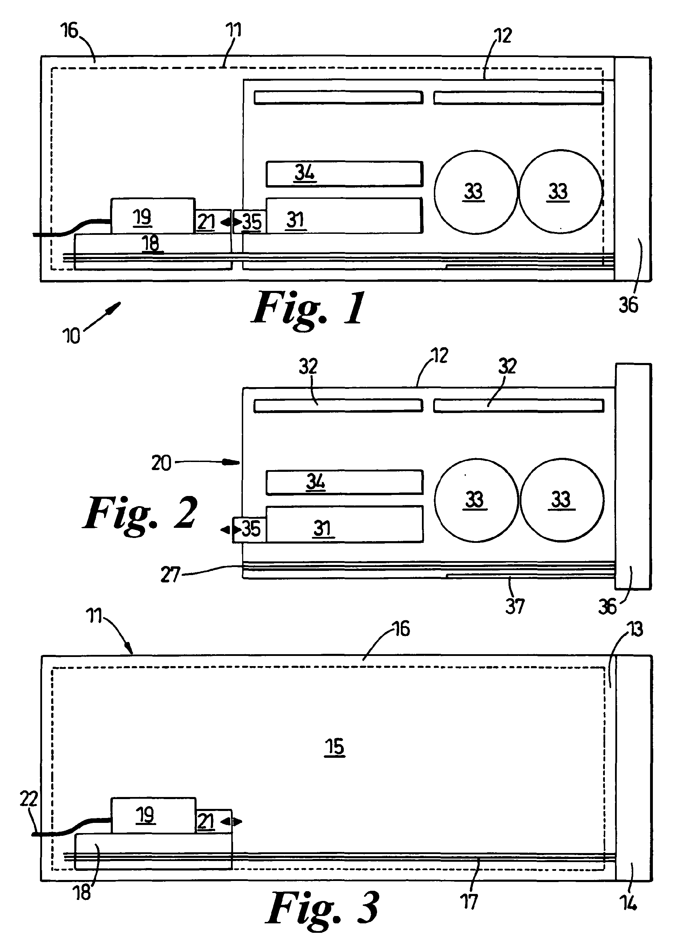

With reference to Figs. 1 to 3 , there is shown an asset tracking assembly 10 which may be fitted to any asset, for example a yacht, as is desired and which is more typically used for tracking and monitoring a vehicle trailer unit or cargo container. The assembly 10 comprises an enclosure 11 which in use is securely fixed to the asset and a tracking unit 20 having a housing 12 which is removably mounted within the enclosure 11.

The enclosure 11 comprises a substantially rectangular box 16 formed from a moulded polymeric material and which has an open end 13 closable by a removable lid 14. Suitable polymeric materials are ABS ( acrylonitrilebutadienestyrene ), glass reinforced nylons, polycarbonate etc.. The box 16 has a pair of opposed sidewalls 15 each having a guide rail 17 thereon. The guide rails 17 may be formed integrally with their respective walls or may be formed separately and attached thereto. The rails 17 may have a dove tail cross-section to engage with a co-operating guide means 27 on the housing 12, for example like section grooves.

At the rear end of the box 16, and to one side thereof, there is located a mounting plate 18 which has a guide means thereon which co-operate with the guide rails 17 to locate the mounting plate 18 within the box 16. The plate 18 is then secured in place by fasteners, screws, rivets etc passing through the walls of the box 16 and carries an electronic circuit 19 and a half connector 21. The electronics circuit 19 may include an electrical connection sensor of the type disclosed in GB-A-2399 467 , the contents of which are hereby incorporated into the present application, which senses when the tracker assembly is connected to an electrical circuitry with optional power source, typically when a trailer is connected electrically with a tractor unit. The electronic circuit 19 may also include a microprocessor unit which carries a unique identification code to act as an electronic identification unit (IDU) in a similar manner to that described in GB-A-2381 915.

The electronic circuit 19 is connected to a ground line, various sensors and other electrical systems, which may include an external power source, via a wire harness 22. Sensors may include door open/close sensors, and temperature sensors and systems may include communication systems and identification systems. In the case of a vehicle, the external power source may be the vehicle's own electrical system. The half connector 21 is preferably one half of a multi-pin D connector with various pins being connected to respective electrical circuits.

The mounting plate 18 is preferably formed from a heat conductive material such as aluminium to act as a heat sink for the electronics in both the enclosure and tracking device.

The housing 12 of the tracking unit 20 is a hollow container also moulded from a suitable polymeric material and which is a slide fit within the enclosure 11. The housing 12 contains a tracking and monitoring device which include a radio transmitter and GPS receiver 34 (e.g. GSM/GPRS communications transceiver), antennae 32, rechargeable batteries 33, interfaced with electronic circuitry 31 (motherboard) including a microprocessor 131, and a battery charger 35 , etc.. Alternatively, the batteries 33 may be consumable items which are changed on discharge in which case there is no need for the electronic circuitry to contain a battery charger circuit. Details of some of these components may be found in PCT/GB01/02869. The GPS receiver and radio transceiver 34 are connected to the motherboard 31 which is connected to a second half connector 35 which can mate with the other half connector 21 located within the enclosure.

The housing 12 has guide surfaces 27 which co-operate with the guide surfaces 17 on the enclosure to align the two half connectors 21 & 35 for interconnection. For example the guide surfaces 27 may be in the form of a dove tail section groove which mates with a dove tail section rail 17 on the enclosure, or vice versa. The base of the housing 12 is provided with a lid 37 for access to the batteries 33. The housing 12 is provided with a second lid 36 which is identical to the enclosure lid 14 so that the second lid 36 can seal the box 16 when the housing 12 is fully engaged or docked in the enclosure 11. The lid 36 can be provided with suitable lock means, for example a key lock, screws with tamperproof heads, etc to prevent unauthorised removal of the tracking device cassette 20 from the enclosure.

When the tracking unit 20, or cassette, is pushed into the enclosure 11 the two half connectors 21,35 automatically inter-engage and an electrical interface is established between the electronic circuitry 19 on the enclosure and the electronic circuitry 31 of the tracking device. The tracking unit 20 is docked within the enclosure and the electronic circuitry 31 of the tracking unit 20 becomes connected to the various sensors and electrical systems wired to the enclosure half connector 21, typically including an external power source for re-charging the batteries 33.

After docking, the tracking unit detects the connection, as will be described later, and reads the enclosure code and then proceeds to transmit data to a base station including the enclosure identity code, time and location, where after reception the enclosure identity code can be replaced with the asset identity via information in a related database.

When the tracking unit is removed from its enclosure, the two half connectors 21,35 disengage and the tracking device detects the disengagement and transmits data to the base station including time and last known location.

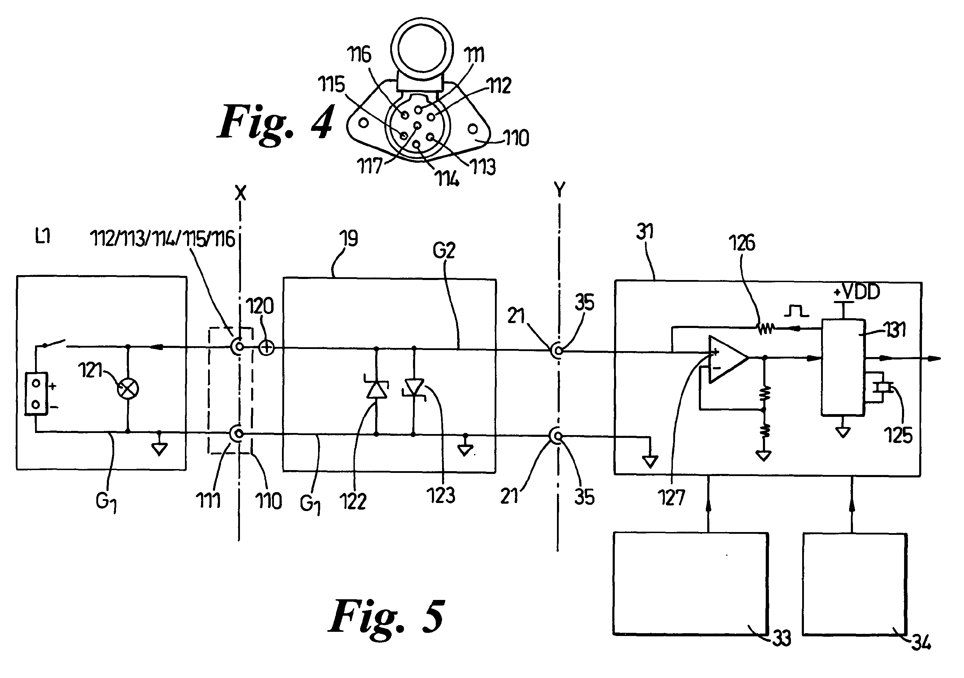

With reference to Fig 4, there is shown half of a 7 pin standard trailer lighting connector 110 (ISO 1185). ISO stands for International Standards Organisation which aims for world wide interchangeability as is agreed by committees of experts. The seven pins 111-117 have various functions, pin 111 is common ground line, pins 112 and 116 are power inputs for the tail lights, pins 113 and 115 are power inputs for the direction indicators, pin 114 is a power inputs for the stop lights and pin 117 in the UK is typically a blank pin, but may be used in other countries for selected auxiliary functions.

With reference now to Fig. 5, there is shown schematically a docking detection system which enables the tracking unit 20 to sense when it is fully docked in and electrically connected with the enclosure 11. A lighting circuit L 1 for a tractor is represented through by a single bulb 121 and circuit to the left of the dotted line X. The tractor electric system is connected to the trailer electric system including the electric circuitry 19 of the enclosure 11, via the pins 111-116 of the ISO connector 110.

The trailer lighting circuit , represented by the single bulb 120, and portion of the enclosure circuitry 19 relating to a device for the docking sensor is shown to the right of the line X. A portion of the tracking unit circuit 31 is shown to the right of line Y and is connected to the enclosure circuit 19 via the two half connectors 21,35 .

The enclosure circuit has wiring terminals for interconnection with the ground line G 2 from the trailer lighting system 120 and with the tractor ground line G 1 (terminal 111). The docking detection device includes a pair of Schottky diodes 122,123 connected in inverse relationship 122,123 between the tractor ground line G1 and the trailer ground line G2 . A Schottky diode is a non linear element which has a high resistance to DC current at low voltages ( less than 0.2 volts) but has low resistance to DC current at any voltage higher than the threshold voltage . The non linear element above its threshold voltage is forward biased and conducts so that the detection system is sensitive to small changes in impedance. The two Schottky diodes are connected inversely in parallel and will conduct current in either direction. Because the resistance is very low at the DC voltages ( 24 volts for commercial vehicles) at which vehicle electrics operate it will have no adverse effect on the vehicle electrical system.

The tracking unit microprocessor 131 is programmed to wait in a low power mode with minimal power consumption from its own battery 33. In the low power mode the peripheral functions are all switched OFF and the main clock oscillator is stopped. The microprocessor 131 has a separate real time clock oscillator 125 which runs continually and generates an interrupt once per second. The interrupt starts the processor main clock and causes the microprocessor 131 to execute an interrupt service routine. The detection of the enclosure and the tractor is a part of the interrupt routine.

The microprocessor 131 produces a pulsed output signal of 3.3V amplitude and 1mS duration, whose current is limited (to about 0.5mA) by a series resistance 126. The pulsed signal is passed to an operational amplifier 127 configured for a voltage gain of 10 . The output of the amplifier 127 is connected to a 10 bit Analogue/Digital (AD) converter integrated within the microprocessor 131.

If the tracking unit 20 is NOT connected to the enclosure 11, the amplitude of the pulse is not reduced by loading so that the input to the amplifiers is 3.3V, its output is also 3.3V which results in a full scale reading from the AD converter of 1024 counts

If the tracking unit 20 IS connected with the enclosure 11, the amplitude of the pulse is clamped by the Schottky diode to approximately 0.25V. This is amplified by the amplifier 127 to 2.5V, resulting in a reading on the AD converter of 1024 X 2.5/3.3 = 775 counts.

If the tracking unit 20, enclosure I and vehicle are fully interconnected through the ISO connector 110, the vehicle wiring system further loads the pulse amplitude by a factor dependant upon the resistance of the monitored circuit and the value of the series resistance 126. The series resistance 126 typically has a high resistance of about 10 KOhms and the vehicle wiring ( primarily the lighting circuit) typically has a low resistance of about 100 Ohms, the amplitude of the pulse is reduces to about 0.032V (100/10,100 X 3.3V). This is amplified to 0.32V at the AD converter resulting in a reading of 99 counts (0.32/3.3 X 1024).

The microprocessor 131 takes the count reading once per second and compares with known threshold values to determine the status, vehicle coupled, vehicle uncoupled, tracking unit docked, or tracking unit undocked.

## Claims

1. An asset tracking assembly comprising an enclosure for securing to a support surface on the asset to be tracked, and a tracking unit comprising a housing with a tracking device therein which is removably mountable within the enclosure, wherein the enclosure includes an electrical circuit with a first programmable microprocessor which enables the tracking unit to sense the presence of the enclosure when the tracking unit is mounted therein and electrically connected to the enclosure electrical circuit.

2. An assembly as claimed in Claim 1 wherein microprocessor in the enclosure is pre-programmed with a unique reference code so that the tracking unit can identify a particular enclosure and hence the related asset on electrical connection of the tracking device with the electrical circuit of the enclosure.

3. An assembly as claimed in Claim 1 or Claim 2, wherein the enclosure and tracking device are interconnected by means of an electrical pin and socket connector, the enclosure and housing each including a respective mating half of said connector and respective guide means act between the housing and enclosure to aid interconnection of the two half connectors on insertion of the tracking unit into the enclosure.

4. An assembly as claimed in any one of Claims 1 to 3, wherein the enclosure half connector in use is permanently connected to at least one external parameter sensor and/or at least one external electrical system, which are connectable to the tracking device through the two half connectors on insertion of the tracking device into the enclosure.

5. An assembly as Claimed in any one of Claims 1 to 4 wherein the assembly is provided with a docking detection device comprising on the tracking unit a second microprocessor which includes a pulse signal generator which generates a test pulse and a monitor which monitors any change in amplitude to said pulse caused by the electrical circuits on the enclosure, and on the enclosure, the electrical circuit is provided with a non linear element which clamps the amplitude of the pulsed signal when the enclosure and tracking unit are connected, the second microprocessor detecting a change in amplitude of said signal between a first monitor reading indicating that the tracking unit is undocked and a second monitor reading indicating that the tracking unit is docked.

6. An assembly as claimed in Claim 5 wherein the detection device also detects the coupling of the enclosure with a further external electrical circuit, wherein the second microprocessor detects a third monitor reading indicating a further change in amplitude of the pulse caused by interconnection of the enclosure with said external electrical circuit.

7. An assembly as claimed in any one of Claims 4 to 6, wherein the tracking device is connected to an external electrical power source by inter-engagement of said two mating half connectors when the tracking unit is inserted into the enclosure.

8. An assembly as claimed in any one of Claims 1 to 10, wherein the enclosure is a box with an open end and guide means acting between the box and the housing are provided on the sidewalls of the box for co-operation with guide surfaces on the housing.

9. An assembly as claimed in Claim 11, wherein the housing has a lid thereon which in use closes the open end of the box and the housing is securely held in the enclosure by lock means which can only be opened by authorised persons.

10. An assembly as claimed in any one of Claims 3 to 9, wherein the enclosure electronics circuit and respective one half of the connector are mounted on a mounting plate which locates on guide means on the enclosure, the mounting plate acting as a heat sink for the electronics circuit and tracking device..

11. A method of installation of a tracking device on an asset which is to be tracked by means of the tracking device, wherein in said method there is provided;
an enclosure for securing to a support surface on said asset, the enclosure including an electrical circuit with a programmable microprocessor,
a tracking unit having a housing with said tracking device therein and which is removably mountable within the enclosure, and
on electrical connection of the tracking unit to the enclosure electric circuit, the presence of the tracking device within the enclosure is automatically sensed.

12. A method as claimed in Claim 11, wherein the microprocessor carries a unique reference code and the tracking unit can identify a particular closure and hence a particular asset.

13. A method as claimed in Claim 11 or Claim 12, wherein the enclosure and tracking unit are provided with an electrical connector comprising two mating halves, one half connector being provided on the enclosure with various electrical sensors and/or electrical systems on the asset permanently wired to the enclosure half connector, with the other mating half being provided on the tracking unit and being connected to the tracking device, wherein the tracking device is connected to said enclosure electrical circuit, and to said sensors and/or systems by inter-engagement of said two mating half connectors when the tracking is inserted into the enclosure.

14. A method as claimed in any one of Claims 11 to 13, wherein the tracking unit after sensing connection to or disconnection from the enclosure is pre-programmed to perform particular routine tasks.
